# EUROPÄISCHE PATENTSCHRIFT

(11) **EP 4 441 366 B1**
(45) Veröffentlichungstag und Bekanntmachung des Hinweises auf die Patenterteilung: **24.06.2026**
(21) Anmeldenummer: 22826109.5
(22) Anmeldetag: 01.12.2022
(51) Int. Cl.: F04B 39/00, F04B 35/01, F16C 3/20, F16C 3/06, F16C 9/00, F16C 9/02, F16C 9/04, F16C 7/02, F16H 57/02, B29C 73/16

(54) **DRUCKLUFTKOMPRESSOR UND DRUCKLUFTBEREITSTELLUNGSSYSTEM**
AIR COMPRESSOR AND COMPRESSED AIR SUPPLY SYSTEM
COMPRESSEUR D'AIR ET SYSTÈME DE FOURNITURE D'AIR COMPRIMÉ

(30) Priorität: 02.12.2021 DE 102021131829
(43) Veröffentlichungstag der Anmeldung: 09.10.2024
(73) Patentinhaber: Aircom Automotive Sp. z.o.o. Sp. K., 55-080 Pietrzykowice (PL)
(72) Erfinder: GSCHWENDER, Dominik, 8266 Steckborn (CH); JESKOWIAK, Jakub, 55-340 Ujazd Górny (PL)
(74) Vertreter: DREISS Patentanwälte PartG mbB
(86) Internationale Anmeldenummer: PCT/EP2022/084112
(87) Internationale Veröffentlichungsnummer: WO 2023/099686

(56) Entgegenhaltungen:
- DE-A1- 102013 100 014
- DE-U1- 20 212 329
- DE-U1- 202019 105 328
- US-A- 2 946 503

## Beschreibung

Die Erfindung betrifft einen Druckluftkompressor und ein Druckluftbereitstellungssystem, insbesondere zum Bereitstellen von Luft für Reifen eines Kraftfahrzeugs. Die Erfindung bezieht sich auf einen Druckluftkompressor mit einem Kurbelsystem mit einseitiger Abstützung. Das bedeutet, das Kurbelsystem ist nur auf einer Seite gelagert.

Aus dem Stand der Technik sind Druckluftkompressoren Druckluftbereitstellungssysteme bekannt, beispielsweise US 2 946 503 A. Beispielsweise sind Druckluftbereitstellungssysteme bekannt, die über einen Dichtflüssigkeitsbehälter mit einem abzudichtenden Luftreifen verbindbar sind. Der Dichtflüssigkeitsbehälter wird beispielsweise mit einer Lufteinlassöffnung an einen Kompressor des Druckluftbereitstellungssystems angeschlossen und mit einer Auslassöffnung, über die ein Luft-/Dichtflüssigkeitsgemisch austreten kann, mit dem Reifen verbunden. Beim Betrieb des Kompressors tritt im an den Reifen angeschlossenen Zustand Dichtmittel in den Reifen ein, das eine Öffnung in dem Reifen verschließen kann und so eine Weiterfahrt nach einer Reifenpanne erlaubt, ohne dass ein Ersatzreifen montiert werden muss. Insbesondere kann durch solche Druckluftbereitstellungssysteme auf die Mitführung von Ersatzrädern verzichtet werden, wodurch das Platzangebot z.B. in einem Kofferraum eines Kraftfahrzeugs verbessert wird.

Der Kompressor, insbesondere ein Verdichter des Kompressors, wird beispielsweise mit einem Elektromotor angetrieben, wobei der Verdichter einen in einem Zylinder geführten Kolben aufweist, der über ein Getriebe mit dem Elektromotor gekoppelt ist, um den Kolben in seiner Hubbewegung zur Verdichtung der Luft anzutreiben.

Dabei ist im Stand der Technik bei einseitig gelagerten Kurbeltypen, beispielsweise bekannt, dass die Pleuelstange, wenn sich der Kolben im unteren oder im oberen Totpunkt der Hubbewegung befindet, entlang der Zylinderachse verläuft beziehungsweise, dass die Zylinderachse durch die Pleuelstange verläuft. Ein zentrales Lager einer Kurbel, die die Pleuelstange bewegt, ist versetzt zu dieser Zylinderachse angeordnet. Die Zylinderachse verläuft also nicht durch die zentrale Lagerung der Kurbelwelle. Die Zylinderachse und die zentrale Lagerung der Kurbelwelle sind also nicht koaxial angeordnet. Dadurch wirkt ein Biegemoment auf die Kurbelwelle. Dies kann zu einer ungünstigen Kopplung zwischen den Zähnen im Getriebe, der Kurbel und ihrer zentralen Welle sowie zwischen der Kurbel und der Pleuelstange führen und einen schnelleren Verschleiß des Getriebes und der Lager verursachen.

Die Aufgabe der vorliegenden Erfindung ist es, eine gegenüber dem Stand verbesserte Lösung zum Anordnen von Elemente bei Druckluftkompressoren und Druckluftbereitstellungssystemen bereitzustellen. Insbesondere sollen Biegemomente auf die Kurbel und andere Elemente der Druckluftkompressoren vermieden werden.

Diese Aufgabe wird durch einen Druckluftkompressor mit den Merkmalen des Anspruchs 1 gelöst.

Bei dem vorliegenden Druckluftkompressor ist vorgesehen, dass eine Zylinderachse sowohl durch die zentrische Lagerung der Kurbel als auch durch die exzentrische Lagerung der Kurbel mit der Pleuelstange verläuft, wenn sich ein Kolbenhub des Kolbens im unteren oder oberen Totpunkt befindet.

Beim Kompressionshub übt das Gas eine Kraft Fg auf den Kolben aus. Die Kraft Fg wird auf die Kurbel, insbesondere auf Lager der Kurbel übertragen. Dadurch tritt an der Kurbel eine Reaktionskraft RFg auf. Bei der erfindungsgemäßen Anordnung der Kurbel, insbesondere die zentrische Lagerung der Kurbel und die exzentrische Lagerung der Kurbel mit der Pleuelstange, in Bezug auf die Zylinderachse wirkt sowohl die Kraft Fg als auch die Reaktionskraft RFg entlang der Zylinderachse. Daher wirkt kein Biegemoment an der Kurbel.

Gemäß einer Ausführungsform kann vorgesehen sein, dass ein Zahnrad in die Kurbel integriert ist. In diesem Fall gelten die gleichen Vorteile, nämlich kein einwirkendes Biegemoment, auch für das Zahnrad.

Die Zylinderachse verläuft durch die exzentrische Lagerung der Kurbel mit der Pleuelstange wenn sich ein Kolbenhub des Kolbens im unteren oder oberen Totpunkt befindet. Mit anderen Worten kann dies auch verallgemeinert dadurch beschrieben werden, dass die exzentrische Lagerung der Kurbel mit der Pleuelstange in einer Ebene senkrecht zu einer Rotationsachse der Kurbel angeordnet ist, wobei die Ebene die Zylinderachse umfasst.

In dieser Ebene ist ebenfalls die zentrische Lagerung der Kurbel angeordnet.

Von dem Merkmal, dass die Zylinderachse sowohl durch die zentrische Lagerung der Kurbel als auch durch die exzentrische Lagerung der Kurbel mit der Pleuelstange verläuft, ist umfasst, dass die Zylinderachse derart durch die Lagerungen verläuft, dass die Zylinderachse innerhalb einer Breite der jeweiligen Lagerung verläuft.

In Weiterbildung des Erfindungsgedankens kann es sich als vorteilhaft erweisen, dass die Zylinderachse durch eine Symmetrieachse der zentrische Lagerung der Kurbel verläuft.

In Weiterbildung des Erfindungsgedankens kann es sich als vorteilhaft erweisen, dass die Zylinderachse durch eine Symmetrieachse der exzentrischen Lagerung der Kurbel mit der Pleuelstange verläuft, wenn sich ein Kolbenhub des Kolbens im unteren oder oberen Totpunkt befindet. Mit anderen Worten kann dies auch verallgemeinert dadurch beschrieben werden, dass eine Symmetrieachse der exzentrischen Lagerung der Kurbel mit der Pleuelstange in einer Ebene senkrecht zu einer Rotationsachse der Kurbel, wobei die Ebene die Zylinderachse umfasst, verläuft beziehungsweise von dieser Ebene umfasst ist.

Die Symmetrieachse der zentrische Lagerung der Kurbel verläuft vorteilhafterweise ebenfalls in dieser Ebene, beziehungsweise ist von dieser Ebene umfasst.

Die zentrische Lagerung und/oder die exzentrische Lagerung umfasst beispielsweise ein Kugellager.

In Weiterbildung des Erfindungsgedankens erweist es sich als vorteilhaft, dass die Zylinderachse durch ein Getriebezahnrad des Getriebes, insbesondere durch eine Symmetrieachse des Getriebezahnrads des Getriebes, über das Kurbel mit dem Antrieb gekoppelt ist, verläuft.

Es ist vorgesehen, dass die Pleuelstange abgewinkelt und/oder gebogen ist. Gemäß dieser Ausführungsform wirkt das Biegemoment an der Pleuelstange. Dadurch kann verhindert werden, dass das Biegemoment an Lager und Getriebe wirkt und eine damit zusammenhängende Abnutzung verhindern. Ferner ist vorgesehen, dass die Pleuelstange einen gegenüber der Pleuelstange vorspringenden Kopplungsteil umfasst, wobei der vorspringende Kopplungsteil mit einer entsprechenden Aufnahme bei der Kurbel die exzentrische Lagerung bildet, und wobei die Pleuelstange ausgehend von dem vorspringenden Kopplungsteil in Richtung des Kolbens von der Zylinderachse weggebogen, ausgebildet ist.

Gemäß einer Ausführungsform verläuft die Zylinderachse zumindest teilweise außerhalb der Pleuelstange.

In Weiterbildung des Erfindungsgedankens erweist es sich als vorteilhaft, dass die Kurbel wenigstens ein Auswuchtgewicht umfasst, und das Auswuchtgewicht in einer Ebene senkrecht zu einer Rotationsachse der Kurbel, wobei die Ebene die Zylinderachse umfasst, angeordnet ist.

Weitere Ausführungsformen betreffen eine Kurbel für einen Druckluftkompressor gemäß den beschriebenen Ausführungsformen. Die Kurbel umfasst eine Aufnahme für eine zentrische Lagerung und eine Aufnahme für eine exzentrische Lagerung einer Pleuelstange. Gemäß der vorliegenden Erfindung ist vorgesehen, dass die Aufnahme für die zentrische Lagerung und die Aufnahme für die exzentrische Lagerung mit der Pleuelstange in einer Ebene senkrecht zu einer Rotationsachse der Kurbel angeordnet sind.

In einer Ausführungsform umfasst die Kurbel ein integriertes Zahnrad.

Weitere Ausführungsformen betreffen eine Reifenabdicht- und/oder Reifenaufpumpvorrichtung, umfassend einen Druckluftkompressor gemäß den beschriebenen Ausführungsformen und/oder einen Druckluftkompressor mit einer Kurbel gemäß den beschriebenen Ausführungsformen.

Diese und weitere Merkmale der Erfindung ergeben sich auch aus der nachfolgenden Beschreibung sowie der Zeichnung und den Ansprüchen.

Die Erfindung wird im Folgenden an Hand einer Zeichnung näher erläutert. Dabei zeigen:
- Fig. 1: eine schematische Darstellung einer aus dem Stand der Technik bekannte Verdichtereinheit eines Druckluftkompressors;
- Fig. 2: eine schematische Darstellung einer erfindungsgemäßen Verdichtereinheit eines Druckluftkompressors;
- Fig. 3: eine Detailansicht der Darstellung aus Fig. 2, und
- Fig. 4: eine schematische Darstellung eines Druckluftbereitstellungssystems mit einem Dichtflüssigkeitsbehälter und einem Reifen.

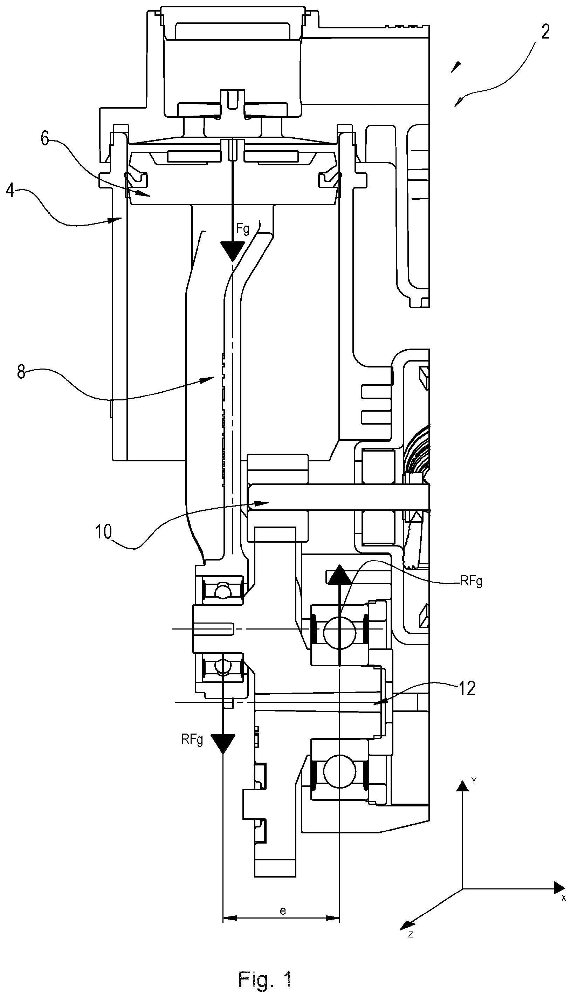

Figur 1 zeigt eine aus dem Stand der Technik bekannte Verdichtereinheit 2 eines Druckluftkompressors mit einem einseitig gelagerten Kurbeltyp.

Die Verdichtereinheit 2 umfasst ein Zylindergehäuse 4 mit einem darin angeordnet Kolben 6. Der Kolben 6 ist über eine Pleuelstange 8 mit einem Getriebezahnrad 10 gekoppelt. Das Getriebezahnrad 10 ist mit einer zentralen Welle der Kurbel 12 gekoppelt.

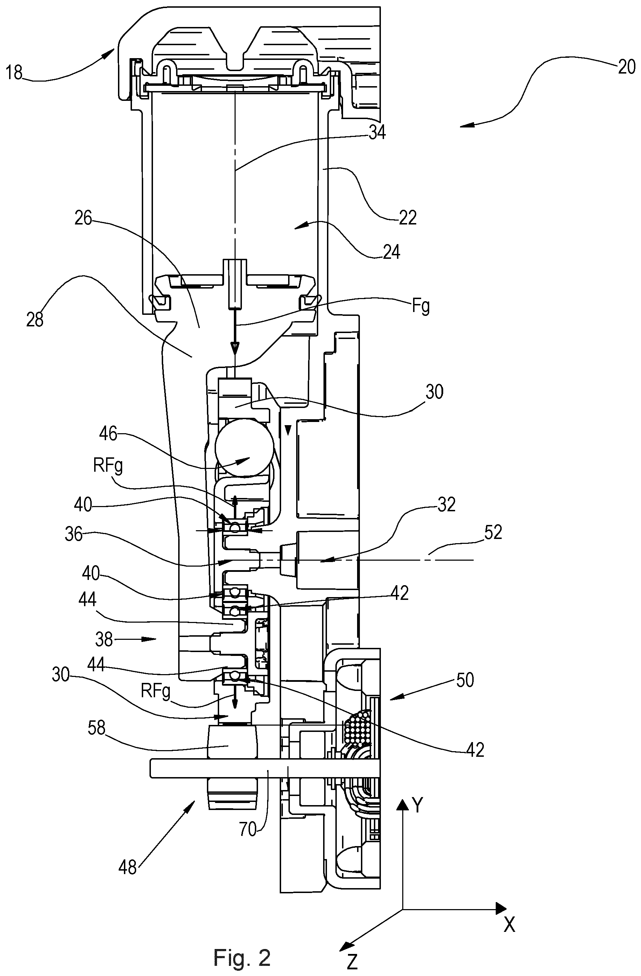

Figur 2 zeigt eine erfindungsgemäße Verdichtereinheit 20 eines Druckluftkompressors. Die Verdichtereinheit 20 umfasst eine von einem Zylindergehäuse 22 umschlossene Zylinderkammer 24. Weiter ist ein Auslassventil 18 gemäß der dargestellten Ausführungsform an der Zylinderkammer 24 angeordnet. Über das Auslassventil gelangt Druckluft aus der Zylinderkammer 24. In der Zylinderkammer 24 ist ein Kolben 26 angeordnet. Der Kolben 26 ist über eine exzentrische Lagerung 42 einer Pleuelstange 28 mit einer Kurbel 30 gekoppelt.

Bei dem Druckluftkompressor handelt es sich um ein Kurbelsystem mit einseitiger Abstützung. Das bedeutet, das Kurbelsystem ist nur auf einer Seite gelagert.

Die Kurbel 30 ist über ein Getriebe 48 mit einem nicht vollständig dargestellten Elektromotor 50 gekoppelt, um den Kolben 30 in seiner Hubbewegung zur Verdichtung der Luft anzutreiben.

Weiter umfasst die Kurbel 30 eine zentrische Lagerung 36. Über die zentrische Lagerung 36 ist die Kurbel an einem Fixierschaft 32 drehbar gelagert.

Eine Zylinderachse ist mit dem Bezugszeichen 34 gekennzeichnet. Das Kurbel 30 ist derart angeordnet, dass die Zylinderachse 34 durch die Kurbel 30 verläuft. Dabei verläuft die Zylinderachse 34 sowohl durch die zentrische Lagerung 36 der Kurbel als auch durch die exzentrische Lagerung 38 der Kurbel 30 mit der Pleuelstange 28, wenn sich ein Kolbenhub des Kolbens 26 im unteren oder oberen Totpunkt befindet. Gemäß der dargestellten Ausführungsform befindet sich der Kolbenhub des Kolbens 26 im unteren Totpunkt.

Beim Kompressionshub wird eine Kraft Fg auf den Kolben 26 ausgeübt. Diese Kraft Fg wird über die Pleuelstange 28 auf die Kurbel 30 übertragen. An der Kurbel 30 tritt eine Reaktionskraft RFg auf. Bei der erfindungsgemäßen Anordnung der Kurbel 30, insbesondere die zentrische Lagerung 36 der Kurbel 30 und die exzentrische Lagerung 38 der Kurbel 30 mit der Pleuelstange 28, in Bezug auf die Zylinderachse 34 wirkt sowohl die Kraft Fg als auch die Reaktionskraft RFg entlang der Zylinderachse 34. Daher wirkt kein Biegemoment an der Kurbel 30.

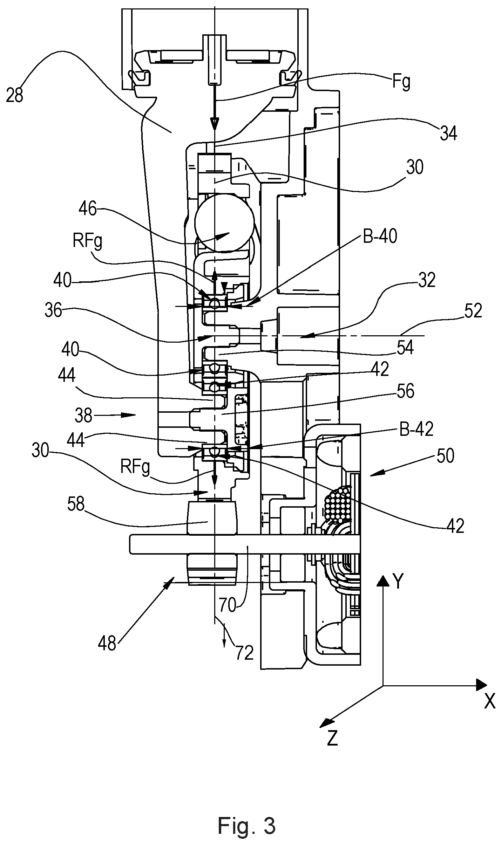

Gemäß den Figuren 2 und 3 umfasst die Kurbel 30 ein integriertes Zahnrad. In diesem Fall gelten die gleichen Vorteile, nämlich kein wirkendes Biegemoment, auch für das Zahnrad.

Zum Vergleich wird an dieser Stelle auf die Figur 1 verwiesen, die die aus dem Stand der Technik bekannte Verdichtereinheit 2 zeigt. In Figur 1 ist ersichtlich, dass das Getriebezahnrad 10, insbesondere eine Lagerung über die das Getriebezahnrad 10 gegenüber der zentralen Welle der Kurbel 12 gelagert ist, versetzt zur Zylinderachse angeordnet ist. Dadurch wirkt das Biegemoment M = Fg x e auf das Getriebezahnrad 10.

Zurück zu Figur 2, gemäß der dargestellten Ausführungsform ist die zentrische Lagerung 36 der Kurbel 30 derart angeordnet ist, dass die Zylinderachse 34 durch die zentrische Lagerung 36 der Kurbel 30 verläuft.

Weiter ist gemäß der dargestellten Ausführungsform vorgesehen, dass die exzentrische Lagerung 38 der Kurbel 30 mit der Pleuelstange 28 derart angeordnet ist, dass die Zylinderachse 34 durch die exzentrische Lagerung 38 der Kurbel 30 mit der Pleuelstange 28 verläuft, wenn sich ein Kolbenhub des Kolbens 26 im unteren oder oberen Totpunkt befindet.

Mit anderen Worten kann dies auch verallgemeinert dadurch beschrieben werden, dass die exzentrische Lagerung 38 der Kurbel 30 mit der Pleuelstange 28 in einer Ebene senkrecht zu einer Rotationsachse 52 der Kurbel 30 angeordnet ist, wobei die Ebene die Zylinderachse 34 umfasst.

In dieser Ebene ist ebenfalls die zentrische Lagerung 36 der Kurbel 30 angeordnet.

An der Kurbel 30 ist ein erstes Lager 40, insbesondere ein Kugellager, für zentrische Lagerung 36 der Kurbel 30 und zweites Lager 42, insbesondere ein Kugellager, für exzentrische Lagerung 42 der Kurbel 30 mit der Pleuelstange 28 vorgesehen.

Von dem Merkmal, dass die Zylinderachse 34 sowohl durch die zentrische Lagerung 36 der Kurbel 30 als auch durch die exzentrische Lagerung 38 der Kurbel 30 mit der Pleuelstange 28 verläuft, ist umfasst, dass die Zylinderachse 34 derart durch die Lager 40, 42 verläuft, dass die Zylinderachse 34 innerhalb einer jeweiligen Breite B-40 und B-42 des jeweiligen Lagers 40, 42 verläuft, vgl. Fig. 3.

Gemäß der dargestellten Ausführungsform ist auch vorgesehen, dass die Zylinderachse 34 durch eine Symmetrieachse 54 der zentrischen Lagerung 36, insbesondere durch eine Symmetrieachse 54 des Lagers 40, verläuft, vgl. Fig. 3.

Gemäß der dargestellten Ausführungsform ist auch vorgesehen, dass die Zylinderachse 34 durch eine Symmetrieachse 56 der exzentrischen Lagerung 38, insbesondere durch eine Symmetrieachse 56 des Lagers 42 verläuft, wenn sich der Kolbenhub des Kolbens im unteren oder oberen Totpunkt befindet. Mit anderen Worten kann dies auch verallgemeinert dadurch beschrieben werden, dass die Symmetrieachse 56 des Lagers 42 in einer Ebene senkrecht zur Rotationsachse 52 der Kurbel 30, wobei die Ebene die Zylinderachse 34 umfasst, verläuft, beziehungsweise von dieser Ebene umfasst ist.

Die Symmetrieachse 54 des Lagers 40 verläuft ebenfalls in dieser Ebene, beziehungsweise ist von dieser Ebene umfasst.

Wenn sich der Kolben 26 im unteren oder im oberen Totpunkt der Hubbewegung befindet sind gemäß der dargestellten Ausführungsform sowohl das das Lager 40 als auch das Lager 42, 42, und damit die zentrische Kopplung 36 und die exzentrische Kopplung 38 entlang der Zylinderachse 34 übereinander angeordnet, vgl. Figuren 2 und 3.

Gemäß der dargestellten Ausführungsform umfasst das Getriebe 48, mit dem die Kurbel 30 mit dem Elektromotor 50 gekoppelt ist, ein Getriebezahnrad 58 und eine Antriebswelle 70.

Gemäß der dargestellten Ausführungsform ist das Getriebezahnrad 58 derart angeordnet, dass die Zylinderachse 34 durch das Getriebezahnrad 58, insbesondere durch eine Symmetrieachse 72 des Getriebezahnrads 58 verläuft.

Gemäß der dargestellten Ausführungsform ist weiter ersichtlich, dass die Pleuelstange 28 abgewinkelt und/oder gebogen ist. Darunter wird eine Biegung oder eine Abwinklung gemäß der in Figur 2 dargestellten Schnittansicht verstanden. Beispielsweise umfasst die Pleuelstange 28 einen gegenüber der Pleuelstange 28 vorspringenden Kopplungsteil 44, wobei der vorspringende Kopplungsteil 44 der Pleuelstange 28 mit einer entsprechenden Aufnahme bei der Kurbel 30 die exzentrische Kopplung 42 bildet. Der vorspringende Kopplungsteil 44 bildet beispielsweise eine Abwinklung.

Weiter ist die Pleuelstange 28 leicht gebogen, nämlich ausgehend von dem vorspringenden Kopplungsteil 44 in Richtung des Kolbens 26 von der Zylinderachse 34 weggebogen, ausgebildet.

Gemäß der dargestellten Ausführungsform umfasst die Kurbel 30 wenigstens ein Auswuchtgewicht 46. Das Auswuchtgewicht 46 ist gemäß der dargestellten Ausführungsform in einer Ebene senkrecht zur Rotationsachse 52 der Kurbel 30, wobei die Ebene die Zylinderachse 34 umfasst, angeordnet.

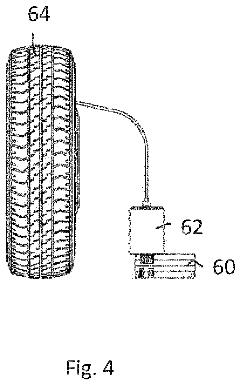

Schließlich zeigt Figur 4 eine schematische Darstellung eines Druckluftbereitstellungssystems 60, das über einen Dichtflüssigkeitsbehälter 62 mit einem abzudichtenden bzw. aufzupumpenden Luftreifen 64 verbunden ist. Der Dichtflüssigkeitsbehälter 62 ist gemäß der Darstellung unmittelbar mit dem Druckluftbereitstellungssystem 60 gekoppelt. Alternativ kann der Dichtflüssigkeitsbehälter 62 auch über ein weiteres nicht dargestelltes Verbindungselement mit dem Druckluftbereitstellungssystem 60 verbunden werden kann. Bei Systemen gemäß der dargestellten Ausführungsform wird Druckluft zum Eintrag von Dichtflüssigkeit sowie zusätzliche Druckluft zu Verteilung der Dichtflüssigkeit in dem Luftreifen durch das Druckluftbereitstellungssystem 60 bereitgestellt, wobei die Druckluft durch den Dichtflüssigkeitsbehälter 62 hindurchgeleitet wird.

Der Dichtflüssigkeitsbehälter 62 wird beispielsweise mit einer Lufteinlassöffnung an einen Kompressor des Druckluftbereitstellungssystems 60 angeschlossen und mit einer Auslassöffnung, über die ein Luft-/Dichtflüssigkeitsgemisches austreten kann, mit dem Reifen verbunden. Der Kompressor, insbesondere ein Verdichter des Kompressors, wird beispielsweise mit einem Elektromotor angetrieben. Der Kompressor des Druckluftbereitstellungssystems 60 umfasst vorteilhafterweise eine Verdichtereinheit 20 gemäß der in Zusammenhang mit Figur 2 beschriebenen Ausführungsform.

Alternativ kann das Druckluftbereitstellungssystem 60 auch direkt mit dem aufzupumpenden Luftreifen 64 verbunden werden.

## Patentansprüche

1. Druckluftkompressor umfassend einen Antrieb, insbesondere einen Elektromotor (50), zum Antreiben eines Verdichters (20) des Kompressors, wobei der Verdichter (20) einen in einem Zylinder (22) geführten Kolben (26) und eine Kurbel (30) aufweist, wobei die Kurbel (30) über eine exzentrische Lagerung (38) mit einer Pleuelstange (28) des Kolbens (26) und über ein Getriebe (48) mit dem Antrieb gekoppelt ist und eine zentrische Lagerung (36) aufweist, wobei eine Zylinderachse (34) sowohl durch die zentrische Lagerung (36) der Kurbel (30) als auch durch die exzentrische Lagerung (38) der Kurbel (30) mit der Pleuelstange (28) verläuft, wenn sich ein Kolbenhub des Kolbens (26) im unteren oder oberen Totpunkt befindet, **dadurch gekennzeichnet, dass** die Pleuelstange (28) abgewinkelt und gebogen ausgebildet ist, wobei die Pleuelstange (28) einen gegenüber der Pleuelstange (28) vorspringenden Kopplungsteil (44) umfasst, wobei der vorspringende Kopplungsteil (44) mit einer entsprechenden Aufnahme bei der Kurbel (30) die exzentrische Lagerung (38) bildet, und wobei die Pleuelstange (28) ausgehend von dem vorspringenden Kopplungsteil (44) in Richtung des Kolbens (26) von der Zylinderachse (34) weggebogen, ausgebildet ist.

2. Druckluftkompressor nach Anspruch 1, **dadurch gekennzeichnet**, die Zylinderachse (34) durch eine Symmetrieachse (54) der zentrischen Lagerung (36) der Kurbel (30) verläuft.

3. Druckluftkompressor nach einem der Ansprüche 1 oder 2, **dadurch gekennzeichnet**, die Zylinderachse (34) durch eine Symmetrieachse (56) der exzentrischen Lagerung (38) der Kurbel (30) mit der Pleuelstange (28) verläuft, wenn sich ein Kolbenhub des Kolbens (26) im unteren oder oberen Totpunkt befindet.

4. Druckluftkompressor nach wenigstens einem der vorhergehenden Ansprüche, **dadurch gekennzeichnet, dass** die zentrische Lagerung (36) und/oder die exzentrische Lagerung (38) ein Kugellager (40, 42) umfasst.

5. Druckluftkompressor nach einem der vorhergehenden Ansprüche, **dadurch gekennzeichnet, dass** die Zylinderachse (34) durch ein Getriebezahnrad (58) des Getriebes (48), insbesondere durch eine Symmetrieachse (72) des Getriebezahnrads (58) des Getriebes (48), über das die Kurbel (30) mit dem Antrieb gekoppelt ist, verläuft.

6. Druckluftkompressor nach Anspruch 1, **dadurch gekennzeichnet, dass** die Zylinderachse (34) zumindest teilweise außerhalb der Pleuelstange (28) verläuft.

7. Druckluftkompressor nach wenigstens einem der vorhergehenden Ansprüche, **dadurch gekennzeichnet, dass** die Kurbel (30) wenigstens ein Auswuchtgewicht (46) umfasst, und dass das Auswuchtgewicht (46) in einer Ebene senkrecht zu einer Rotationsachse (52) der Kurbel (30), wobei die Ebene die Zylinderachse (34) umfasst, angeordnet ist.

8. Reifenabdicht- und/oder Reifenaufpumpvorrichtung (60), umfassend einen Druckluftkompressor nach einem der Ansprüche 1 bis 7.

## Claims

1. An air compressor comprising a drive, in particular an electric motor (50), for driving a compressing unit (20) of the compressor, the compressing unit (20) having a piston (26) guided in a cylinder (22) and a crank (30), the crank (30) being coupled to a connecting rod (28) of the piston (26) via an eccentric bearing (38) and to the drive via a gear (48), and the crank having a centric bearing (36), a cylinder axis (34) extending through both the centric bearing (36) of the crank (30) and through the eccentric bearing (38) of the crank (30) with the connecting rod (28) when a piston stroke of the piston (26) is at the bottom dead center or top dead center, **characterized in that** the connecting rod (28) is angled and bent, the connecting rod (28) comprising a coupling part (44) projecting from the connecting rod (28), the projecting coupling part (44) forming the eccentric bearing (38) with a corresponding receptacle at the crank (30), and the connecting rod (28) being bent away from the cylinder axis (34) starting from the projecting coupling part (44) in the direction of the piston (26).

2. The air compressor according to claim 1, **characterized in that** the cylinder axis (34) extends through an axis of symmetry (54) of the centric bearing (36) of the crank (30).

3. The air compressor according to claim 1 or claim 2, **characterized in that** the cylinder axis (34) extends through an axis of symmetry (56) of the eccentric bearing (38) of the crank (30) with the connecting rod (28) when a piston stroke of the piston (26) is at the bottom dead center or top dead center.

4. The air compressor according to at least one of the preceding claims, **characterized in that** the centric bearing (36) and/or the eccentric bearing (38) comprises a ball bearing (40, 42).

5. The air compressor according to any of the preceding claims, **characterized in that** the cylinder axis (34) extends through a gearwheel (58) of the gear (48), in particular through an axis of symmetry (72) of the gearwheel (58) of the gear (48), via which the crank (30) is coupled to the drive.

6. The air compressor according to claim 1, **characterized in that** the cylinder axis (34) extends at least partially outside the connecting rod (28).

7. The air compressor according to at least one of the preceding claims, **characterized in that** the crank (30) comprises at least one balancing weight (46), and **in that** the balancing weight (46) is arranged in a plane perpendicular to an axis of rotation (52) of the crank (30), the plane comprising the cylinder axis (34).

8. A tire sealing and/or tire inflation device (60) comprising an air compressor according to any of claims 1 to 7.

## Revendications

1. Compresseur d'air comprimé comprenant un entraînement, en particulier un moteur électrique (50), pour entraîner un organe de compression (20) du compresseur, ledit organe de compression (20) comprenant un piston (26) guidé dans un cylindre (22) et une manivelle (30), la manivelle (30) étant, par son palier excentrique (38), reliée à une bielle (28) du piston (26) et étant couplée à l'entraînement par une boîte de vitesses (48) et présentant un palier concentrique (36), l'axe du cylindre (34) passant à la fois par le palier concentrique(36) de la manivelle (30) ainsi que par le palier excentrique (38) de la manivelle (30) avec la bielle (28), lorsque la course du piston (26) se situe au point mort inférieur ou supérieur, **caractérisé en ce que** la bielle (28) est formée coudée et incurvée, la bielle (28) comprenant un élément de couplage (44) saillant par rapport à la bielle (28), ledit élément de couplage saillant (44) formant, avec une prise correspondante sur la manivelle (30), le palier excentrique (38), et la bielle (28) étant, à partir de l'élément de couplage saillant (44), formée pliée vers l'extérieur par rapport à l'axe du cylindre (34) en direction du piston (26).

2. Compresseur d'air comprimé selon la revendication 1, **caractérisé en ce que** l'axe du cylindre (34) passe par un axe de symétrie (54) du palier concentrique (36) de la manivelle (30).

3. Compresseur d'air comprimé selon l'une des revendications 1 ou 2, **caractérisé en ce que** l'axe du cylindre (34) passe par un axe de symétrie (56) du palier excentrique (38) de la manivelle (30) avec la bielle (28), lorsque la course du piston (26) se situe au point mort inférieur ou supérieur.

4. Compresseur d'air comprimé selon au moins l'une des revendications précédentes, **caractérisé en ce que** le palier concentrique (36) et/ou le palier excentrique (38) comprend un roulement à billes (40, 42).

5. Compresseur d'air comprimé selon l'une des revendications précédentes, **caractérisé en ce que** l'axe du cylindre (34) passe par une roue dentée (58) de la boîte de vitesses (48), en particulier par un axe de symétrie (72) de la roue dentée (58) de la boîte de vitesses (48), par laquelle la manivelle (30) est couplée à l'entraînement.

6. Compresseur d'air comprimé selon la revendication 1, **caractérisé en ce que** l'axe du cylindre (34) passe au moins partiellement à l'extérieur de la bielle (28).

7. Compresseur d'air comprimé selon au moins l'une des revendications précédentes, **caractérisé en ce que** la manivelle (30) comprend au moins un contrepoids (46), et que le contrepoids (46) est disposé dans un plan perpendiculaire à un axe de rotation (52) de la manivelle (30), ledit plan comprenant l'axe du cylindre (34).

8. Dispositif d'étanchéité et/ou de gonflage de pneus (60), comprenant un compresseur d'air comprimé selon l'une des revendications 1 à 7.
